(19) **Europäisches Patentamt**
**European Patent Office**
**Office européen des brevets**

(11) **EP 1 504 337 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(21) Anmeldenummer: **03727434.7**

(22) Anmeldetag: **05.05.2003**

(51) Int Cl.:
***G06F 7/72*** (2006.01)

(86) Internationale Anmeldenummer:
**PCT/EP2003/004695**

(87) Internationale Veröffentlichungsnummer:
**WO 2003/093972 (13.11.2003 Gazette 2003/46)**

(54) **BERECHNUNG DES MODULAREN INVERSEN EINES WERTES**

CALCULATING THE MODULAR INVERSE OF A VALUE

CALCUL DE L'INVERSE MODULAIRE D'UNE VALEUR

(84) Benannte Vertragsstaaten:
**AT BE BG CH CY CZ DE DK EE ES FI FR GB GR HU IE IT LI LU MC NL PT RO SE SI SK TR**

(30) Priorität: **06.05.2002 DE 10220262**

(43) Veröffentlichungstag der Anmeldung:
**09.02.2005 Patentblatt 2005/06**

(73) Patentinhaber: **Giesecke & Devrient GmbH 81677 München (DE)**

(72) Erfinder: **KAHL, Helmut 80992 München (DE)**

# EP 1 504 337 B1

## Beschreibung

Die Erfindung betrifft allgemein das technische Gebiet der effizient durch einen automatischen Prozessor ausführbaren Algorithmen und spezieller einen verbesserten Algorithmus zur modularen Inversion. Insbesondere eignet sich die Erfindung für kryptographische Anwendungen, wie sie beispielsweise im Zusammenhang mit Chipkarten auftreten.

Auf dem Gebiet der Kryptographie werden Verfahren zur modularen Inversion beispielsweise bei der Erzeugung eines Schlüsselpaars für das in dem US-Patent 4,405,829 beschriebene RSA-Codier- und Signaturverfahren eingesetzt. Das RSA-Verfahren verwendet einen öffentlichen Schlüssel (E, N) und einen geheimen privaten Schlüssel R, wobei der Wert N das Produkt zweier großer Primzahlen P und Q ist. Zur Schlüsselpaarberechnung werden zunächst die Werte P, Q und E festgelegt. Der private Schlüssel R wird dann als das modulare Inverse des Wertes E zum Modul M mit M = (P-1)·(Q-1) berechnet.

Allgemein ist zu zwei gegebenen ganzen Zahlen E und M das modulare Inverse des Wertes E zum Modul M definiert als diejenige Zahl R, für die $0 \leq R < M$ und $1 = E \cdot R \bmod M$ gilt; das Ergebnis R wird auch mit 1/E bezeichnet. Ein modulares Inverses R existiert, wenn E und M teilerfremd sind.

Algorithmen zur Berechnung des modularen Inversen eines vorgegebenen Wertes E zu einem vorgegebenen Modul M sind als solche bekannt. So ist beispielsweise die Verwendung des erweiterten Euklidischen Algorithmus zur modularen Inversion auf den Seiten 47 und 67 des Buches von J. v. z. Gathen und J. Gerhard, "Modern Computer Algebra",1. Auflage, Cambridge University Press, 1999 beschrieben (Algorithmus 3.6 und Theorem 4.1). Eine geringe Effizienzsteigerung bei dem Anwendungsbeispiel der RSA-Schlüsselpaarberechnung ist durch eine Transformation gemäß dem Chinesischen Restesatz möglich. Eine insbesondere im Zusammenhang mit Binärzahlen vorteilhafte Abwandlung des erweiterten Euklidischen Algorithmus ist das Verfahren von Stein, das auf den Seiten 321 bis 324 des Buches von Donald E. Knuth, "The Art of Computer Programming", Band 2, 2. Auflage, Addison-Wesley, 1981 in Verbindung mit Aufgabe 35 auf Seite 339 und der Lösung dazu auf Seite 606 beschrieben ist.

Die genannten Verfahren zur modularen Inversion sind jedoch relativ rechenaufwendig. Sie benötigen ein Mehrfaches der Rechenzeit anderer elementarer modularer Rechenoperationen wie z.B. der modularen Multiplikation (siehe Seite 304, Korollar 11.6 des genannten Buches von Gathen und Gerhard). Dies ist insbesondere dann problematisch, wenn die modulare Inversion von einem Prozessor mit relativ geringer Leistungsfähigkeit ausgeführt werden soll, wie dies beispielsweise bei dem Prozessor einer Chipkarte oder eines anderen tragbaren Datenträgers der Fall ist.

Die Erfindung hat daher die Aufgabe, ein bei der maschinellen Ausführung effizientes Verfahren zur modularen Inversion bereitzustellen. Insbesondere soll sich das Verfahren zur Verwendung für kryptographische Berechnungen auf einem tragbaren Datenträger eignen.

Erfindungsgemäß wird diese Aufgabe ganz oder zum Teil gelöst durch ein Verfahren mit den Merkmalen des Anspruchs 1, ein Computerprogrammprodukt gemäß Anspruch 9 und einen tragbaren Datenträger gemäß Anspruch 10. Die abhängigen Ansprüche definieren bevorzugte Ausgestaltungen der Erfindung.

Die Erfindung geht von der Grundüberlegung aus, daß der Aufwand für die Berechnung des modularen Inversen stark von der Länge des Moduls abhängt. Daher schlägt die Erfindung vor, die Gesamtberechnung in mehrere Teilberechnungen aufzuteilen, denen jeweils ein kürzeres Modul zugrundeliegt. Genauer wird das Modul erfindungsgemäß in mindestens zwei Faktoren zerlegt. Jeder dieser Faktoren wird dann für die Berechnung eines Hilfswertes herangezogen, der das modulare Inverse des ursprünglichen Wertes zu dem Faktor als Modul ist. Aus den berechneten Hilfswerten und gegebenenfalls weiteren Daten wird dann das Gesamtergebnis bestimmt.

Die erfindungsgemäße Grundidee ist überraschend, weil im allgemeinen die Faktorisierung eines Wertes - hier des Moduls - mit prohibitivem Aufwand verbunden ist. Der Erfinder hat jedoch erkannt, daß in vielen praktisch relevanten Situationen bereits eine mindestens teilweise Faktorisierung des Moduls bekannt ist oder sich die Faktoren aus anderen Informationen leicht berechnen lassen. Dies ist beispielsweise bei der eingangs beschriebenen Schlüsselpaarberechnung für das RSA-Verfahren der Fall, bei dem die Faktoren P-1 und Q-1 des Moduls M ohne weiteres zur Verfügung stehen.

Die Erfindung bietet eine erhebliche Effizienzsteigerung, die um so größer ausfällt, je stärker bei dem letztendlich verwendeten Inversionsverfahren die Abhängigkeit des Rechenaufwands von der Modullänge ist. Damit eignet sich die Erfindung besonders zur Ausführung durch relativ leistungsschwache Prozessoren. Die Sicherheit der Berechnung gegen Ausspähungsangriffe wird durch den Einsatz der Erfindung - verglichen mit üblichen Inversionsverfahren - nicht beeinträchtigt. Wenn besonders hohe Sicherheitsanforderungen bestehen, läßt sich die Erfindung jedoch problemlos mit geeigneten Maßnahmen zum Ausspähungsschutz kombinieren.

Die Aufzählungsreihenfolge der Verfahrensschritte in den Ansprüchen soll nicht als Einschränkung des Erfindungsbereichs verstanden werden. Es sind vielmehr Ausgestaltungen der Erfindung vorgesehen, in denen diese Verfahrensschritte in anderer Reihenfolge und/oder ganz oder teilweise parallel und/oder ganz oder teilweise ineinander verzahnt (*interleaved*) ausgeführt werden. Die Erfindung ist ferner nicht auf die Verarbeitung von Ganzzahlen beschränkt. Vielmehr kann das erfindungsgemäße Verfahren als Werte z.B. Polynome oder allgemein die Elemente eines kommutativen Rings mit Einselement nutzen.

Erfindungsgemäß ist vorgesehen, eine Faktorenzerlegung des Moduls zu bestimmen. Der Begriff "bestimmen" soll hierbei auch Fälle umfassen, bei denen lediglich auf vorgegebene, bereits bekannte Faktoren zugegriffen wird. Wenn lediglich zwei Faktoren bekannt sind, erfolgt in diesem Zusammenhang nicht einmal eine irgendwie geartete Auswahl. Sind mehr Faktoren bekannt, so wird vorzugsweise die benötigte Anzahl von Faktoren ausgewählt. Hierbei können die Faktoren nach ihrer Länge oder Größe sortiert oder geeignet zusammengefaßt werden. Unter dem Begriff "Länge" ist hierbei insbesondere die Anzahl der Stellen des Faktors in einem Stellenwertsystem wie z.B. dem Binär- oder Dezimalsystem zu verstehen.

Die Faktoren brauchen nicht prim zu sein. Unter den Begriffen "Faktorisierung" oder "Zerlegung" soll daher nicht notwendigerweise eine Primfaktorzerlegung verstanden werden. In bevorzugten Ausgestaltungen der Erfindung ist vielmehr vorgesehen, auch zusammengesetzte Faktoren ohne weitere Aufteilung zu verarbeiten, wenn z.B. eine solche Aufteilung nicht bekannt ist oder zu Faktoren stark unterschiedlicher Längen führen würde. Aus Effizienzgründen ist es wünschenswert, daß die Längen der Faktoren, die letztendlich als Module zur Inversenbestimmung nach einem bekannten Verfahren herangezogen werden, sich möglichst wenig (z.B. um weniger als 20 % oder um weniger als 50 % der größten Länge) unterscheiden.

Da im allgemeinen die Faktorisierung eines Wertes äußerst rechenaufwendig ist, wird das Verfahren vorzugsweise nur dann eingesetzt, wenn mindestens zwei Faktoren des Moduls bekannt oder mit geringem Aufwand ermittelbar sind. Ein geringer Aufwand in diesem Sinne wird insbesondere dann angenommen, wenn die Faktorzerlegung nicht mehr Rechenoperationen erfordert als die Inversenbestimmung des Wertes zu dem längsten der ermittelten Faktoren als Modul.

Das Verfahren ist schon bei einer einzigen Aufteilung des Moduls in zwei oder drei oder mehr Faktoren sinnvoll einsetzbar. Sind mehr Faktoren bekannt oder leicht ermittelbar, so kann das Verfahren wiederholt ausgeführt werden, wobei eine rekursive oder eine iterative Programmierung möglich ist. Bevorzugt weist das Modul M unterschiedliche Primfaktoren auf oder wird in zumindest einem Berechnungsschritt in mindestens zwei unterschiedliche Faktoren zerlegt.

Das erfindungsgemäße Computerprogrammprodukt weist Programmbefehle auf, um das erfindungsgemäße Verfahren zu implementieren. Ein derartiges Computerprogrammprodukt kann beispielsweise ein Halbleiterspeicher oder eine Diskette oder eine CD-ROM sein, auf denen ein erfindungsgemäßes Berechnungsprogramm gespeichert ist. Insbesondere kann ein derartiges Computerprogrammprodukt zur Verwendung bei der Herstellung von Chipkarten vorgesehen sein.

In bevorzugten Ausgestaltungen sind das Computerprogrammprodukt und/ oder der tragbare Datenträger mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung mehrerer Ausführungsbeispiele und Ausführungsalternativen hervor. Es wird auf die schematischen Zeichnungen verwiesen, in denen zeigen:

Fig. 1 eine Ansicht der in einem Ausführungsbeispiel der Erfindung ausgeführten Berechnungsschritte,

Fig. 2 eine schematische Darstellung eines Berechnungsablaufs mit rekursiver Aufrufstruktur, und

Fig. 3 eine schematische Darstellung eines iterativen Berechnungsablaufs.

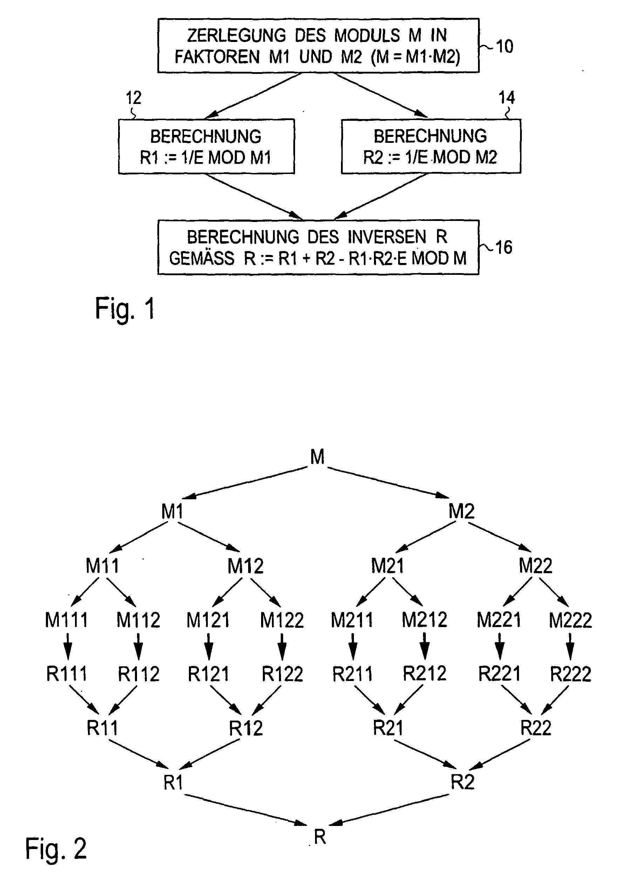

Das in Fig. 1 schematisch dargestellte Verfahren ist dazu vorgesehen, von einem Prozessor eines tragbaren Datenträgers, insbesondere einer Chipkarte (*smart card*) oder eines Chipmoduls, ausgeführt zu werden. Das Verfahren ist dazu in Form von Programmbefehlen für diesen Prozessor implementiert, die in einem ROM oder EEPROM des Datenträgers gespeichert sind.

Erfindungsgemäß wird das Verfahren zur Berechnung des privaten Schlüssels R für ein RSA-Codierverfahren oder ein RSA-Signaturverfahren verwendet. Für einen gegebenen Wert E und gegebene Primzahlen P und Q ist der private Schlüssel R das modulare Inverse des Wertes E zum Modul M mit M = (P-1)·(Q-1). Die Faktoren P-1 und Q-1 des Moduls M sind daher bereits bekannt. Die Tatsache, daß diese Faktoren selbst nicht prim sind, beeinträchtigt den Verfahrensablauf nicht.

In Schritt 10 des Verfahrens wird eine Zerlegung des Moduls M in zwei Faktoren M1 und M2 bestimmt. Diese beiden Faktoren M1 und M2 sind im vorliegenden Ausführungsbeispiel einfach die schon vorliegenden Werte P-1 und Q-1, so daß weder eine Auswahl unter mehreren Möglichkeiten noch weitere Berechnungsschritte erforderlich sind.

In den Schritten 12 und 14 werden dann zwei Berechnungen zur Bestimmung des modularen Inversen des Wertes M zu den Modulen M1 bzw. M2 durchgeführt, um die Hilfswerte R1 und R2 zu erhalten. Für diese Berechnungen kann jedes bekannte Verfahren verwendet werden, wie z.B. der eingangs erwähnte erweiterte Euklidische Algorithmus mit oder ohne Verwendung des Chinesischen Restesatzes. Es ist auch möglich, in den Schritten 12 und 14 das erfindungsgemäße Verfahren rekursiv aufzurufen, worauf später noch genauer eingegangen wird.

Wenn die beiden Hilfswerte R1 und R2 vorliegen, erfolgt in Schritt 16 die Berechnung des Ergebnisses R durch Auswerten der folgenden Beziehung:

$$R = R1 + R2 - R1{\cdot}R2{\cdot}E \bmod M \qquad\qquad (*)$$

Aus mathematischen Überlegungen folgt, daß der so berechnete Wert R tatsächlich das modulare Inverse von E zum Modul M ist, also daß R = 1/E mod M gilt.

Wenn die Faktoren M1 und M2 ungefähr dieselbe Größenordnung, also z.B. ungefähr dieselbe Länge in ihrer Binärdarstellung aufweisen, beträgt der Rechenaufwand für jeden der beiden Schritte 12 und 14 bei üblichen Inversionsverfahren nur ungefähr ein Viertel des Rechenaufwands für die Inversion von E zum Modul M. Der Schritt 10 erfordert keine Rechenoperationen. Der Aufwand für Schritt 16 wird im wesentlichen von den beiden modularen Multiplikationen bestimmt, die deutlich schneller - beispielsweise um den Faktor 8 schneller - als eine modulare Inversion ablaufen. Das Verfahren benötigt daher für die Schritte 12,14 und 16 nur ungefähr 1/4 + 1/4 + 2/8 = 3/4 des Aufwands einer Inversion von E zum Modul M. Selbst in der hier beschriebenen einfachsten Ausgestaltung des Verfahrens, bei der nur eine einzige Aufteilung des Moduls M in zwei Faktoren M1, M2 stattfindet, ergibt sich somit eine Einsparung von ungefähr 25 %.

In einer Abwandlung des Verfahrens von Fig. 1 ist in Schritt 10 nicht eine Aufspaltung in zwei, sondern in drei oder mehr Faktoren M1, M2,... vorgesehen. Bei der Berechnung in Schritt 16 wird dann eine erweiterte Fassung der Beziehung (*) zur Berechnung von R aus der entsprechenden Anzahl von Hilfswerten R1, R2, ... verwendet.

Wie bereits erwähnt, kann das Verfahren in den Schritten 12 und/ oder 14 rekursiv aufgerufen werden. Dies ist natürlich allenfalls dann sinnvoll, wenn eine weitere Faktorenzerlegung der Werte M1 und/ oder M2 bekannt oder leicht berechenbar ist. Ist dies nicht der Fall, so wird für den entsprechenden Berechnungszweig die Rekursion abgebrochen und auf einen anderen, an sich bekannten Algorithmus zur Inversenberechnung zurückgegriffen.

Weitere Abbruchbedingungen für die Rekursion können sein, daß für den zu zerlegenden Wert nur Faktoren mit deutlich unterschiedlicher Länge vorliegen, oder daß eine vorgegebene Mindestgröße des zu zerlegenden Wertes oder seiner Faktoren unterschritten wird. Wenn beispielsweise bei der Berechnung des privaten Schlüssels R in Schritt 12 das modulare Inverse zum Modul M1 = P-1 für die (ungerade) Primzahl P berechnet werden soll, existiert offensichtlich eine ganzzahlige Faktorisierung P-1 = 2.((P-1)/2). Falls keine weiteren Faktoren für (P-1)/2 bekannt sind, ist hier ein rekursiver Aufruf mit den Faktoren 2 und (P-1)/2 in der Regel nicht sinnvoll.

Die in Fig. 2 beispielhaft gezeigte Aufrufstruktur einer rekursiven Berechnung ist vollständig balanciert. Das ursprüngliche Modul M wurde im ersten Schritt 10 in zwei Faktoren M1 und M2 aufgeteilt, jeder dieser Faktoren Mx in einer ersten Rekursionsstufe in die Faktoren Mx1 und Mx2, und jeder dieser Faktoren Mxy in einer zweiten Rekursionsstufe in die Faktoren Mxy1 und Mxy2. Für die acht so erhaltenen Faktoren Mxyz wurde als Hilfswert das entsprechende modulare Inverse Rxyz des Wertes E zum Faktor Mxyz berechnet. Bei den Rücksprüngen von den rekursiven Aufrufen wurden aus den Hilfswerten Rxyz gemäß Schritt 16 zunächst die Hilfswerte Rxy, dann die Hilfswerte Rx und schließlich das Ergebnis R berechnet.

Für eine balancierte Berechnung wie die in Fig. 2 gezeigte, bei der die Rekursion mit einer einheitlichen Verschachtelungstiefe n bis zum Vorhandensein von $k = 2^n$ Faktoren durchgeführt wird, beträgt der Aufwand nur $O(m(k))$ Grundoperationen, wobei $m(k)$ den Aufwand zur modularen Multiplikation zweier Zahlen der Länge k angibt. Diese Abschätzung geht davon aus, daß alle letztendlich vorhandenen $2^n$ Faktoren ungefähr dieselbe Länge aufweisen. Dies ist eine deutliche Verbesserung im Vergleich zu üblichen Verfahren, die einen Aufwand in der Größenordnung von $O(m(k){\cdot}\log(m(k)))$ Grundoperationen erfordern (siehe z.B. Korollar 11.10, Seite 305 des bereits zitierten Buches von Gathen und Gerhard).

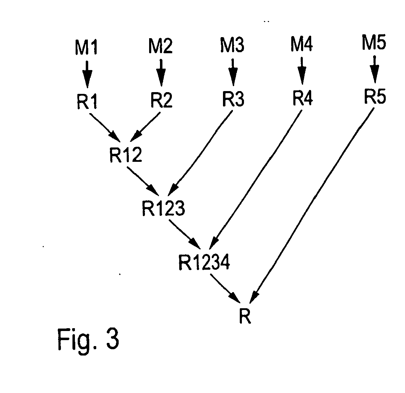

In vielen praktischen Anwendungen wird sich ein vollständig balancierter Ablauf wie in Fig. 2 nicht erreichen lassen. Fig. 3 zeigt den Extremfall eines vollständig unbalancierten Berechnungsablaufs, der von dem Modul M = M1·M2·M3·M4·M5 ausgeht. Eine derartige Berechnung entspricht einer iterativen Implementierung des Verfahrens z.B. mittels einer Programmschleife. Die Schleife geht von einem Paar von Hilfswerten R1, R2 aus und wendet darauf die Beziehung (*) an. Bei jedem Schleifendurchlauf wird durch eine weitere Anwendung der Beziehung (*) ein weiterer Hilfswert R3, R4, ... hinzugefügt, bis schließlich das Inverse R berechnet ist. Ferner kann bei jedem Schleifendurchlauf der jeweils neu benötigte Hilfswert R1, R2, ... aus dem entsprechenden Faktor M1, M2, ... berechnet werden. Alternativ dazu ist es möglich, alle Hilfswerte R1, R2, ... vorab in einer separaten Schleife aus den Faktoren M1, M2, ... zu bestimmen.

Allgemein kann das erfindungsgemäße Verfahren - ob in rekursiver oder iterativer Implementierung - zur Inversenbestimmung eines Wertes E zu einem Modul M dienen, das in einer nicht notwendigerweise vollständigen Faktorisierung mit beliebig vielen Faktoren M1, M2, ... vorliegt. Dazu wird die Beziehung (*) jeweils auf ein Paar von Hilfswerten R1, R2, ..., die aus den Faktoren M1, M2, ... bestimmt worden sind, angewendet. Der erforderliche Rechenaufwand ist dann besonders gering, wenn die Faktoren M1, M2, ... ungefähr einheitliche Längen aufweisen. Um dies zu gewährleisten, können in einem vorbereitenden Schritt oder während der Berechnung jeweils zwei oder mehr Faktoren Mx, My, ... zusammengefaßt werden. Sie gehen dann als Wert Mx·My.... in die Berechnung ein, der nicht weiter zerlegt wird, obwohl seine Faktorisierung bekannt wäre.

**Patentansprüche**

1. Computerimplementiertes Verfahren der Schlüsselpaarbestimmung bei einem RSA-Codier- oder Signaturverfahren durch Berechnung des modularen Inversen (R) eines Wertes (E) zu einem Modul (M) mittels der folgenden Schritte:

   a) Bestimmen (10) einer Zerlegung des Moduls (M) in mindestens zwei Faktoren P-1 und Q-1, wobei P und Q die bei RSA vorgegebenen Primzahlen sind,
   b) Berechnen (12,14) je eines Hilfswertes (R1, R2) zu jedem der in Schritt a) bestimmten Faktoren (P-1, Q-1), wobei jeder Hilfswert (R1, R2) das modulare Inverse des Wertes (E) zu dem jeweiligen Faktor (P-1, Q-1) als Modul ist, und
   c) Berechnen (16) des modularen Inversen (R) des Wertes (E) zum Modul (M) zumindest unter Verwendung der in Schritt b) berechneten Hilfswerte (R1, R2).

2. Verfahren nach Anspruch 1, **dadurch gekennzeichnet, daß** in Schritt c) das modulare Inverse (R) des Wertes (E) zum Modul (M) gemäß der Beziehung

$$R = R1 + R2 - R1 \cdot R2 \cdot E \bmod M \qquad (*)$$

berechnet wird.

3. Verfahren nach Anspruch 2, **dadurch gekennzeichnet, daß** bei mindestens einer Berechnung die Beziehung (*), gegebenenfalls verbunden mit der Hilfswertberechnung, in einem iterativen Verfahren wiederholt ausgewertet wird.

4. Verfahren nach einem der Ansprüche 1 oder 2, **dadurch gekennzeichnet, daß** bei mindestens einer Berechnung in Schritt b) ein rekursiver Aufruf des Verfahrens erfolgt.

**Claims**

1. Computer implemented method of determining a pair of keys in an RSA encoding or signature generation method by calculating the modular inverse (R) of a value (E) in relation to a module (M), with the following steps:

   a) determining (10) a breakdown of the module (M) into at least two factors P-1 and Q-1, wherein P and Q are the prime numbers given in RSA,
   b) calculating (12,14) a respective auxiliary value (R1, R2) for each of the factors (P-1, Q-1) determined in step a), wherein each auxiliary value (R1, R2) is the modular inverse of the value (E) in relation to the respective factor (P-1, Q-1) as module, and
   c) calculating (16) the modular inverse (R) of the value (E) in relation to the module (M) at least using the auxiliary values (R1, R2) calculated in step b).

2. Method according to claim 1, **characterized in that** in step c) the modular inverse (R) of the value (E) in relation to the module (M) is calculated according to the relationship

$$R = R1 + R2 - R1 \cdot R2 \cdot E \bmod M \qquad (*).$$

3. Method according to claim 2, **characterized in that** in at least one calculation the relationship (*), if applicable in connection with the calculation of the auxiliary values, is repeatedly evaluated in an iterative method.

4. Method according to one of claims 1 or 2, **characterized in that** in at least one calculation in step b) a recursive call of the method takes place.

**Revendications**

1. Procédé mis en oeuvre par ordinateur de la détermination de paire de codes dans le cas d'un procédé de codage RSA ou de signature par calcul de l'inverse (R) modulaire d'une valeur (E) par rapport à un module (M) au moyen des étapes suivantes :

   a) détermination (10) d'un démontage du module (M) en au moins deux facteurs P-1 et Q-1, P et Q étant les nombres premiers prédéfinis pour RSA.
   b) calcul (12,14) de respectivement une valeur auxiliaire (R1, R2) pour chacun des facteurs (P-1, Q-1) déterminés à l'étape a), chaque valeur auxiliaire (R1, R2) étant l'inverse modulaire de la valeur (E) par rapport au facteur respectif (P-1, Q-1) en tant que module, et
   c) calcul (16) de l'inverse modulaire (R) de la valeur (E) par rapport au module (M) au moins avec l'utilisation des valeurs auxiliaires (R1, R2) calculées à l'étape b).

2. Procédé selon la revendication 1, **caractérisé en ce que** l'inverse (R) modulaire de la valeur (E) par rapport au module (M) est calculée à l'étape c) selon la relation suivante

$$R = R1 + R2 - R1{\cdot}R2{\cdot}E \bmod M \qquad (*).$$

3. Procédé selon la revendication 2, **caractérisé en ce que**, lors d'au moins un calcul, la relation (*), éventuellement associée au calcul de la valeur auxiliaire, est analysée de façon répétée dans un procédé itératif.

4. Procédé selon l'une des revendications 1 ou 2, **caractérisé en ce qu'**un appel récurent du procédé intervient pour au moins un calcul à l'étape b).

Fig. 1

Fig. 2

M1    M2    M3    M4    M5
↓     ↓     ↓     ↓     ↓
R1    R2    R3    R4    R5

R12

R123

R1234

R

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A

**In der Beschreibung aufgeführte Nicht-Patentliteratur**

- **VON DONALD E. KNUTH.** The Art of Computer Programming. Addison-Wesley, 1981, vol. 2, 321-324339, 606